# EUROPEAN PATENT APPLICATION

(11) **EP 3 916 418 A1**
(43) Date of publication of application: **01.12.2021**
(21) Application number: 20290047.8
(22) Date of filing: 28.05.2020
(51) Int. Cl.: G01S 5/02, G06Q 20/32

(54) **METHODS AND SYSTEMS FOR COMMITTING TRANSACTIONS UTILIZING RF RANGING WITH A LARGE NUMBER OF USERS**

(71) Applicant: NXP B.V., 5656 AG Eindhoven (NL)
(72) Inventor: de Perthuis, Hugues Jean Marie, 5656 AG Eindhoven (NL); Leong, Frank, 5656 AG Eindhoven (NL); Heisrath, Sören, 5656 AG Eindhoven (NL); Parthasrathi, Srivathsa Masthi, 5656 AG Eindhoven (NL)
(74) Representative: Krott, Michel

(57) **Abstract**

There is described a system for tracking and handling transactions with a plurality of mobile user devices within a predetermined area, the system comprising a plurality of anchors (110-127) distributed across the predetermined area to form a UWB network, each anchor within the plurality of anchors belonging to at least one of (i) a first group of anchors adapted to allow mobile user devices (131, 132, 133) entering the predetermined area to attach anonymously to the UWB network and to establish secure communication between the UWB network and each mobile user device on an available communication channel, (ii) a second group of anchors adapted to track the location of mobile user devices connected to the UWB network, utilizing secure communication with the mobile user devices, wherein each anchor in the second group is adapted to hand over communication with a mobile user device to another anchor and/or to change a communication channel for the mobile user device, depending on network load and/or device position, and (iii) a third group of anchors adapted to perform a transaction with a mobile user device connected to the UWB network and located within a trigger area (105). There is also described a corresponding method.

## Description

### FIELD OF THE INVENTION

The present invention relates to the field of RF communication systems, in particular RF communication systems capable of interacting and committing transactions with a large number of user devices. More specifically, the present invention relates to a system for tracking and handling transactions with a plurality of mobile user devices within a predetermined area. Furthermore, the present invention relates to a corresponding method.

### ART BACKGROUND

RFID based technology is widely used for transit and access control systems. The user taps a card against a reader and a transaction occurs. These systems offer fairly good user privacy protection as the communication range is short (a few centimeters) and the cards can only be accessed when a user actually triggers an RFID transaction.

In order to improve usability and convenience, it is contemplated to replace the short range RFID systems with RF technologies having less limited communication ranges, such as e.g. UWB (ultrawideband) technology. With such systems, where the range may be tens of meters, the transactions can become seamless as a user will not have to tap his tag/mobile against a reader anymore but merely move through a designated area. However, in such systems interference between devices may become an issue, e.g. in a large transit station which may contain thousands of users at the same time while hundreds of users enter and leave the facility simultaneously.

There may be thus be a need for a way of overcoming the drawbacks mentioned above.

### SUMMARY OF THE INVENTION

This need may be met by the subject matter according to the independent claims. Advantageous embodiments of the present invention are set forth in the dependent claims.

According to a first aspect there is provided a system for tracking and handling transactions with a plurality of mobile user devices within a predetermined area. The system comprises a plurality of anchors distributed across the predetermined area to form a UWB network, each anchor within the plurality of anchors belonging to at least one of (i) a first group of anchors adapted to allow mobile user devices entering the predetermined area to attach anonymously to the UWB network and to establish secure communication between the UWB network and each mobile user device on an available communication channel, (ii) a second group of anchors adapted to track the location of mobile user devices connected to the UWB network, utilizing secure communication with the mobile user devices, wherein each anchor in the second group is adapted to hand over communication with a mobile user device to another anchor and/or to change a communication channel for the mobile user device, depending on network load and/or device position, and (iii) a third group of anchors adapted to perform a transaction with a mobile user device connected to the UWB network and located within a trigger area.

This aspect is based on the idea that a first group of anchors is provided to allow mobile user devices to attach anonymously to the UWB network in such a way that the mobile user devices can communicate securely with the UWB network on an available communication channel, that a second group of anchors track the location of each attached mobile user device by communicating securely with the mobile user devices while handing over communication to another anchor and/or changing the communication channel in dependency on the network load and/or device position, and that a third group of anchors perform transactions with connected mobile user devices that are located within certain trigger areas. Thereby, it is assured that new mobile user devices can attach to the UWB network, that the connected mobile user devices can be tracked reliably within the predetermined area while remaining anonymous, and that the transactions, which may require that the mobile user device reveals the identity of its user, are only performed or committed on very specific conditions, namely that the device is located within a trigger area.

In the present context, the term "mobile user device" may particularly denote a compact electronic device, such as a smart phone, a tablet, a dedicated device, or the like that is compact and capable of communicating with an UWB network. More specifically, the mobile user device may be loaded with a dedicated app for handling the communication.

In the present context, the term "anchor" may particularly denote a node in the UWB network, said node being capable of transmitting and receiving messages at least in the UWB frequency band.

In the present context, the term "predetermined area" may particularly denote an area within which it is possible to communicate with at least one anchor and thereby with the UWB network. It should be noted that the exact size and shape of the predetermined area also depends on the particular mobile device and its communication capabilities.

In the present context, the term "trigger area" may particularly denote a limited and clearly marked area, such as a gate, which a user may enter or pass through in order to indicate his or her willingness to commit a transaction, such as starting or ending a public transportation travel segment.

In the present context, the term "to attach anonymously" may particularly denote that a mobile user device attaches to the network without revealing any unnecessary and sensitive information, such as the identity or other personal information of the user. The UWB network will be able to track the mobile user device but does not know who the user is.

In the present context, the term "secure communication" may particularly denote encrypted communication. In other words, an exchange of keys may take place when a mobile user device attaches to the UWB network.

According to an embodiment, the anchors belonging to the first group of anchors are located at a periphery of the predetermined area.

Thereby, mobile user devices coming from outside and entering the predetermined area will be able to communicate with an anchor belonging to the first group of anchors and thereby attach to the UWB network.

According to a further embodiment, the anchors belonging to the first group of anchors are further adapted to detach mobile user devices leaving the predetermined area from the UWB network.

Thereby, when it is determined that a mobile user device is headed in a direction indicating that it leaves the predetermined area, an anchor belonging to the first group of anchors will end the communication session with the mobile user device and preferably delete the session data, such as temporary device ID, etc.

According to a further embodiment, the anchors belonging to the first group are adapted to assign a random ID to mobile user devices attaching anonymously to the UWB network.

In other words, once the mobile user device is attached to the UWB network, it is "known" to the network as the random ID. Hence, as long as the UWB network only tracks the location of the mobile user device, it will not know more about the mobile user device than the random ID. The identity and other personal information of the user is not known to the UWB network. The next time the mobile device communicates with the UWB network (or with another UWB network at another location), it will be assigned a new random ID. Hence, it is not possible for the UWB network to track the actual device or its user between different sessions. An external observer will not be able to track a user within a session as all ranging communications are encrypted.

According to a further embodiment, the anchors belonging to the second group of anchors are adapted to track the location of mobile user devices by performing time of flight measurements.

The time of flight measurements provide information on the distance between the mobile user device and each of the anchors (of the second group of anchors) participating in the communication with the mobile user device. Using this information and triangulation techniques, the current position of the mobile user device within the predetermined area can be determined.

In operation, each of the participating anchors (belonging to the second group of anchors) preferably sends a message to the mobile user device and measures the time until a corresponding response is received from the mobile device. The communication for performing the time of flight measurements utilizes UWB.

According to a further embodiment, the anchors belonging to the second group of anchors are adapted to hand over communication with the mobile user device to another anchor when the mobile user device is moving towards said other anchor.

Thereby, assuming that the user will maintain the direction of movement, at least for some time, it can be expected that the other anchor selected in this way will be able to communicate with the mobile user device for some time after the handover.

According to a further embodiment, the anchors belonging to the second group of anchors are adapted to hand over communication with the mobile user device to another anchor when the mobile user device is moving towards said other anchor and/or if the network load on said other anchor is lower.

In other words, the communication with the mobile user device is preferably handed over to an anchor that is located on the expected path of movement and/or has a lower network load.

According to a further embodiment, the anchors belonging to the second group of anchors are adapted to change the communication channel for the mobile user device when the load on the current channel exceeds a predetermined channel threshold.

Thereby, disturbances and communication fall outs can be prevented.

According to a further embodiment, the anchors belonging to the third group of anchors are adapted to perform the transaction with the mobile user device located within the trigger area by emulating a contactless card transaction.

In other words, the actual transaction is performed by exchanging data in the same way as when a user holds his or her RFID or NFC device to a reader in RFID-based systems. Hence, only at this stage sensitive data is exchanged between the mobile user device and the UWB network. The exchange of data can be performed by another protocol encapsulated within the UWB data frames.

According to a further embodiment, the anchors belonging to the third group are adapted to perform the transaction on the condition that the mobile user device moves in a predetermined direction within the trigger area.

In other words, it is assured that the direction of user movement indicates the user's intention to commit the transaction. For example, this can assure that the transaction is only carried out if the user moves through a gate or a similar designated area within the trigger area in a certain direction, e.g. towards a train platform.

According to a further embodiment, the secure communication between the plurality of anchors and the mobile user devices utilizes UWB.

According to a further embodiment, the anchors that belong to the first group of anchors also belong to the second group of anchors, and/or the anchors that belong to the third group of anchors also belong to the second group of anchors.

In other words, all anchors may actually belong to the second group of anchors and thereby be capable of tracking the mobile user devices and handing over communication to other anchors. On the other hand, the first and third groups of anchors may be true subsets of the anchors.

According to a further embodiment, the system is arranged at a public transportation station.

According to a second aspect, there is provided a method of tracking and handling transactions with a plurality of mobile user devices within a predetermined area, wherein a plurality of anchors is distributed across the predetermined area to form a UWB network, each anchor within the plurality of anchors belonging to at least one of a first group of anchors, a second group of anchors and a third group of anchors. The method comprises utilizing an anchor belonging to the first group of anchors: anonymously attaching mobile user devices entering the predetermined area to the UWB network and establishing secure communication between the UWB network and each mobile user device on an available communication channel, tracking the location of mobile user devices connected to the UWB network utilizing secure communication between at least one anchor belonging to the second group of anchors and the mobile user devices, depending on network load and/or device position: handing over communication with a mobile user device from an anchor in the second group of anchors to another anchor and/or changing a communication channel for the mobile user device, and performing a transaction with a mobile user device connected to the UWB network and located within a trigger area utilizing an anchor belonging to the third group of anchors.

This aspect is essentially based on the same idea as the first aspect discussed above.

It should be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless otherwise indicated, in addition to any combination of features belonging to one type of subject matter also any combination of features relating to different subject matters, in particular a combination of features of the method type claims and features of the apparatus type claims, is also disclosed with this document.

The aspects defined above and further aspects of the present invention will be apparent from the examples of embodiment to be described hereinafter and are explained with reference to the examples of embodiment. The invention will be described in more detail hereinafter with reference to examples of embodiment to which the invention is, however, not limited.

### BRIEF DESCRIPTION OF THE DRAWING

Figure 1 shows a system in accordance with an exemplary embodiment.
Figure 2 shows a flowchart of a method in accordance with an exemplary embodiment.

### DETAILED DESCRIPTION

The illustration in the drawing is schematic. It is noted that in different figures, similar or identical elements are provided with the same reference signs or with reference signs, which differ only within the first digit.

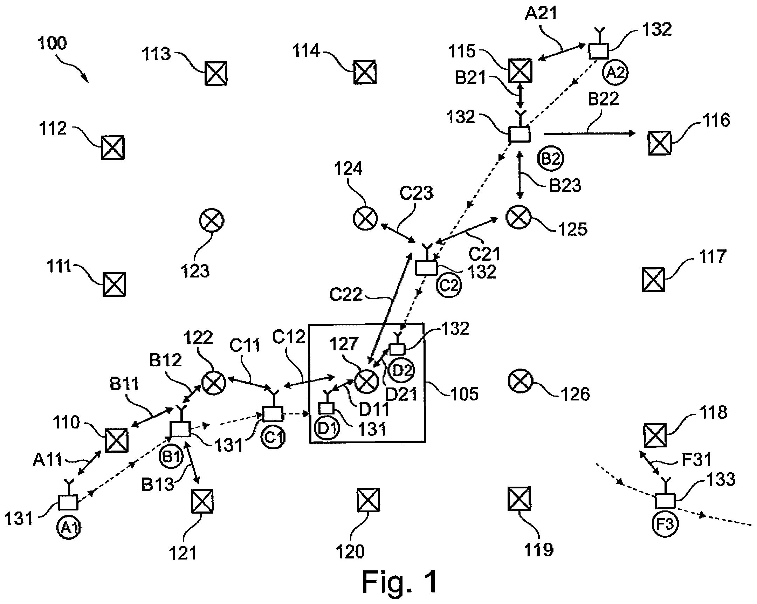

Figure 1 shows a system 100 in accordance with an exemplary embodiment. The system 100 comprises a plurality of anchors 110, 111, 112, 113, 114, 115, 116, 117, 118, 119, 120, 121, 122, 123, 124, 125, 126, 127 arranged across a predetermined area to establish a UWB network covering said predetermined area. Within the predetermined area there is a designated trigger area 105. It should be noted that the limited number of anchors and the reference to only a single trigger area 105 purely serves to facilitate explanation of the embodiment. In other embodiments, the UWB network may contain tens or hundreds of anchors and as many trigger areas as needed to provide the desired functionality at a given location, such as a train station.

The system 100 interacts with a plurality of mobile user devices 131, 132, 133, such as smart phones loaded with an app for communicating with the UWB network and for committing transactions, such as checking in and out in a public transportation system. It should be noted that Figure 1 only shows three mobile user devices for ease of illustration. In reality, there may be hundreds or thousands of mobile user devices within the predetermined area.

Each of the anchors 110, 111, 112, 113, 114, 115, 116, 117, 118, 119, 120, 121, 122, 123, 124, 125, 126, 127 belongs to at least one of three groups: (i) a first group of anchors configured to allow mobile user devices 131, 132, 133 entering the predetermined area to attach anonymously to the UWB network and to establish secure communication between the UWB network and each mobile user device on an available communication channel; (ii) a second group of anchors configured to track the location of mobile user devices connected to the UWB network, utilizing secure communication with the mobile user devices, wherein each anchor in the second group is adapted to hand over communication with a mobile user device to another anchor and/or to change a communication channel for the mobile user device, depending on network load and/or device position; and a third group of anchors adapted to perform a transaction with a mobile user device connected to the UWB network and located within a trigger area (105). In the embodiment shown in Figure 1 the first group of anchors comprises the anchors 110-121 that arc located at the periphery of the predetermined area or network area. These anchors 110-121 are illustrated as squares with a cross inside in Figure 1 and serve to attach new mobile user devices that enter the network and to detach mobile user devices leaving the network area. The second group of anchors comprises all the anchors 110-127 while the third group of anchors only comprises the anchor 127. In alternative embodiments, the second group of anchors may not comprise all anchors, and the three groups may thus be disjoint.

The anchors in the second group of anchors, which as mentioned above preferably comprises all anchors of the UWB network, are configured to track the location of the mobile user devices as these move along within the predetermined area. This tracking takes place without the network obtaining any knowledge of the user carrying the device. Furthermore, the anchors in the second group of anchors is capable of handing over the secure communication with a mobile user device to another anchor in dependency on network load and/or device position. Hence, if a particular anchor is very busy communicating with a large number of devices, it may handover one or more devices to other anchors with more capacity. Similarly, if a device moves away from the anchor is may be beneficial to hand over the communication to an anchor on the expected route of the device. Furthermore, the anchor may change the communication channel if the current channel is busy and another channel with more free capacity is available.

The anchor(s) in the third group is (are) capable of performing a transaction with the mobile user device provided that the latter is located within the trigger area 105. Furthermore, the direction of movement of a mobile user device may be taken into consideration when determining whether a transaction should be performed or not. In other words, the mobile user device may have to move in a certain direction within the trigger area 105 in order to trigger the transaction. Once a transaction takes place, the identity of the user will be revealed to the extent necessary.

Figure 1 shows a first mobile device 131 at four different locations A1, B1, C1, and D1 within the predetermined area. At location A1 (in the lower left corner), the first mobile device 131 has just entered the predetermined area and is woken up and ready to connect with the UWB network via anchor 110 which belongs to the first group and, as indicated by the arrow A11, is within range of the first mobile device 131. The wake-up may be initiated by a signal (such as a Wifi, BLE or another RF signal) broadcast by the anchor 110 and received by the first mobile device 131, or by utilizing a geofencing info, based e.g. on GPS or Wifi/BLE. At this stage, the first mobile device 131 also receives initial network data, which may include a unique network ID and/or a unique transit system ID as well as other information that may allow for faster connection (such as preferred RF transport layer parameters) and for providing additional proof, e.g. a timestamp. The additional proof must be authenticated, e.g. signed by a private anchor/network key. Then, before attempting to connect to the anchor 110, the first mobile device 131 verifies that the UWB network (represented by the anchor 110 in this case) is genuine. This verification uses information in the initial network data, e.g. to determine an expected location of the UWB network and comparing it with the current location of the first mobile device 131, obtained from a source such as GPS, cellular network cell ID, Wifi, etc. The determination of the expected location may utilize a database stored locally in the first mobile device 131, e.g. provisioned and updated regularly, a database stored remotely and accessed via a trusted out of band connection, e.g. a cellular network, and/or information broadcast by the anchor 110. In every case, the information must be authenticated, e.g. via a secure connection or via public key cryptography. The information may also be timestamped, thereby allowing the device to confirm that the broadcast information and signature thereon is recent.

Only if this verification succeeds, the first mobile device 131 initiates communication with the anchor 110 to start a session. This may be done using protocols described in IEEE802.15.8 and involves partial mutual authentication and assigning a random ID to the first mobile device 131 for use during the session. As soon as a slot has been assigned, the first mobile device 131 and the anchor 110 will generate a session key with partial authentication. This process may utilize one of several existing authentication schemes based on asymmetric cryptography. For maximum security against attackers (including devices of the same network), a scheme to generate an ephemeral key based on static and dynamic keys can be used (such as the one described in NIST Special Publication 800-56A: "Recommendation for Pair-Wise Key Establishment Schemes Using Discrete Logarithm Cryptography").

An exemplary process for generating the session key may include generating an ephemeral device key at the first mobile device 131 while utilizing a static device key for authentication, and generating an ephemeral anchor key at the anchor 110 while utilizing a static anchor key for authentication. Then, the ephemeral device key is shared with the anchor 110 and the ephemeral anchor key and the static anchor key are shared with the first mobile device 131. Finally, the session key is generated at the first mobile device 131 based on the ephemeral anchor key and the static device key, and the session key is generated at the anchor 110 based on the ephemeral device key and the static anchor key. Now, both parties (i.e. the first mobile device 131 and the anchor 110) have the session key (often referred to as "common secret") in their possession and can use it for secure communication throughout the session. Thereby, the following advantages are obtained: The session key is unknown to an eavesdropping adversary (based on the use and definition of a multiparty authentication scheme); the session key cannot be computed by and is unknown to a man-in-the-middle adversary; the session key proves the anchor identity and that the mobile device belongs to network; the key will be used to derive the keys used for the rest of the session.

Now, having established the session key, the first mobile device 131 and the UWB network (initially the anchor 110) can communicate securely with each other during the session, in particular for tracking the location of the first mobile device 131 within the predetermined area as the user moves away from the initial location A1 shown in the lower left corner of Figure 1. As the first mobile device 131 moves along towards the trigger area 105, it will respond to messages from the one or more anchors within its reach, such that the position of the first mobile device 131 can be continuously obtained on the basis of corresponding time of flight measurements, i.e. by measuring the time from sending a message from an anchor until the same anchor receives a response from the first mobile device 131. By applying triangulation and possibly other techniques to the repeatedly obtained distances from the corresponding anchors, not only the position but also the direction and/or speed of the moving device 131 can be tracked. Figure 1 shows some further positions of the mobile device 131 along its route to the trigger area 105. In position B1, the first mobile device 131 is connected to the anchors 110, 122 and 121 as indicated by corresponding arrows B11, B12, B13 while in position C1 further down the route, the first mobile device 131 is connected to the anchors 122 and 127 as indicated by corresponding arrows C11 and C12. Finally, at position D1, the first mobile device 131 has arrived within the trigger area 105 and now is now communication with anchor 127 which belongs to the third group of anchors. Upon determining that the first mobile device 131 is located within the trigger area 105, the first mobile device 131 commits a transaction, e.g. by emulating a contactless card transaction with the anchor 127. Only at this stage, as part of committing the transaction, the identity of the user is revealed to the system 100. Accordingly, if the user decided to not enter the trigger area 105 (or any other trigger area) and just leaved the predetermined area again, e.g. if he/she was simply walking through a train station, the system would track a random ID until end of the session without knowing the identity of the corresponding user.

Figure 1 also shows a second mobile user device 132 which enters the predetermined area at location A2 in the upper right corner of Figure 1 and attaches to the UWB network by communicating with anchor 115 as indicated by arrow A21, which belongs to the first group of anchors. Figure 1 also shows some further positions of the second mobile user device 132 along its route to the trigger area 105. In position B2, the second mobile device 132 is connected to the anchors 115, 116 and 125 as indicated by corresponding arrows B21, B22, B23 while in position C2 further down the route, the second mobile device 132 is connected to the anchors 125, 127 and 124 as indicated by corresponding arrows C21, C22, and C23. Finally, at position D2, the second mobile device 132 has arrived within the trigger area 105 and now is now communication with anchor 127 which belongs to the third group of anchors. Upon determining that the second mobile device 132 is located within the trigger area 105, the second mobile device 132 commits a transaction, e.g. by emulating a contactless card transaction with the anchor 127. Only at this stage, as part of committing the transaction, the identity of the user is revealed to the system 100. Accordingly, if the user decided to not enter the trigger area 105 (or any other trigger area) and just leaved the predetermined area again, e.g. if he/she was simply walking through a train station, the system would track a random ID until end of the session without knowing the identity of the corresponding user.

At location F3 in the lower right corner of Figure 1, a third mobile user device 133 is shown detaching from the UWB network by communicating with anchor 118 of the first group of anchors as indicated by arrow F31. Once the third mobile user device 133 is detached from the network, the corresponding random ID will be deleted and no traces of the person carrying the third mobile user device 133 through the predetermined area will be left in the network.

While the first and second mobile user devices 131, 132 move along through the predetermined area towards the trigger area 105, the various anchors communicating with the mobile user devices 131, 132 will hand over communication to other anchors in case of high network load and if it makes sense in consideration of the current device position and direction of movement. Furthermore, additionally or alternatively, e.g. if a handover is currently not possible, an anchor may choose to switch the communication channel to one with more free capacity. Thereby, a large number of mobile user devices can be tracked and handled simultaneously without interference.

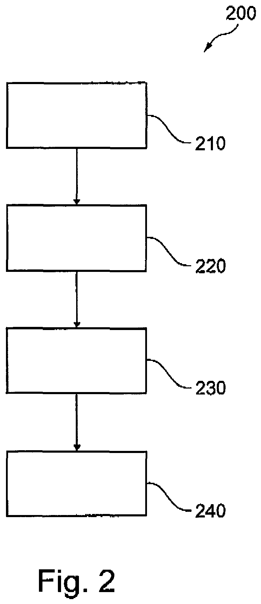

Figure 2 shows a flowchart 200 of a method in accordance with an exemplary embodiment. The method 200 begins at 210 with anonymously attaching mobile user devices entering the predetermined area to the UWB network and establishing secure communication between the UWB network and each mobile user device on an available communication channel, utilizing an anchor belonging to the first group of anchors. Then, at 220 the location of mobile user devices connected to the UWB network is tracked utilizing secure communication between at least one anchor belonging to the second group of anchors and the mobile user devices. Then, depending on network load and/or device position, at 230 communication with a mobile user device from an anchor in the second group of anchors is handed over to another anchor and/or a communication channel for the mobile user device is changed. Finally, at 240, a transaction is performed with a mobile user device connected to the UWB network and located within a trigger area utilizing an anchor belonging to the third group of anchors.

The transaction will occur over the same channel as used for ranging or a separate one. The transaction might emulate a RFID transaction over the selected transport channel, for compatibility with existing infrastructure. User identity will be disclosed as in a typical RFID transaction.

It is noted that, unless otherwise indicated, the use of terms such as "upper", "lower", "left", and "right" refers solely to the orientation of the corresponding drawing.

It is noted that the term "comprising" does not exclude other elements or steps and that the use of the articles "a" or "an" does not exclude a plurality. Also elements described in association with different embodiments may be combined. It should also be noted that reference signs in the claims should not be construed as limiting the scope of the claims.

## Claims

1. A system for tracking and handling transactions with a plurality of mobile user devices within a predetermined area, the system comprising
a plurality of anchors (110-127) distributed across the predetermined area to form a UWB network, each anchor within the plurality of anchors belonging to at least one of
a first group of anchors adapted to allow mobile user devices (131, 132, 133) entering the predetermined area to attach anonymously to the UWB network and to establish secure communication between the UWB network and each mobile user device on an available communication channel,
a second group of anchors adapted to track the location of mobile user devices connected to the UWB network, utilizing secure communication with the mobile user devices, wherein each anchor in the second group is adapted to hand over communication with a mobile user device to another anchor and/or to change a communication channel for the mobile user device, depending on network load and/or device position, and
a third group of anchors adapted to perform a transaction with a mobile user device connected to the UWB network and located within a trigger area (105).

2. The system according to the preceding claim, wherein the anchors belonging to the first group of anchors are located at a periphery of the predetermined area.

3. The system according to any one of the preceding claims, wherein the anchors belonging to the first group of anchors arc further adapted to detach mobile user devices leaving the predetermined area from the UWB network.

4. The system according to any one of the preceding claims, wherein the anchors belonging to the first group are adapted to assign a random ID to mobile user devices attaching anonymously to the UWB network.

5. The system according to any one of the preceding claims, wherein the anchors belonging to the second group of anchors are adapted to track the location of mobile user devices by performing time of flight measurements.

6. The system according to any one of the preceding claims, wherein the anchors belonging to the second group of anchors arc adapted to hand over communication with the mobile user device to another anchor when the mobile user device is moving towards said other anchor.

7. The system according to any one of the preceding claims, wherein the anchors belonging to the second group of anchors are adapted to hand over communication with the mobile user device to another anchor when the mobile user device is moving towards said other anchor and/or if the network load on said other anchor is lower.

8. The system according to any one of the preceding claims, wherein the anchors belonging to the second group of anchors are adapted to change the communication channel for the mobile user device when the load on the current channel exceeds a predetermined channel threshold.

9. The system according to any one of the preceding claims, wherein the anchors belonging to the third group of anchors are adapted to perform the transaction with the mobile user device located within the trigger area by emulating a contactless card transaction.

10. The system according to any one of the preceding claims, wherein the anchors belonging to the third group are adapted to perform the transaction on the condition that the mobile user device moves in a predetermined direction within the trigger area.

11. The system according to any one of the preceding claims, wherein the secure communication between the plurality of anchors and the mobile user devices utilizes UWB.

12. The system according to any one of the preceding claims, wherein the anchors that belong to the first group of anchors also belong to the second group of anchors, and/or wherein the anchors that belong to the third group of anchors also belong to the second group of anchors.

13. The system according to any one of the preceding claims, wherein the system is arranged at a public transportation station.

14. A method of tracking and handling transactions with a plurality of mobile user devices within a predetermined area, wherein a plurality of anchors is distributed across the predetermined area to form a UWB network, each anchor within the plurality of anchors belonging to at least one of a first group of anchors, a second group of anchors and a third group of anchors, the method comprising
utilizing an anchor belonging to the first group of anchors: anonymously attaching (210) mobile user devices entering the predetermined area to the UWB network and establishing secure communication between the UWB network and each mobile user device on an available communication channel,
tracking (220) the location of mobile user devices connected to the UWB network utilizing secure communication between at least one anchor belonging to the second group of anchors and the mobile user devices,
depending on network load and/or device position: handing over (230) communication with a mobile user device from an anchor in the second group of anchors to another anchor and/or changing a communication channel for the mobile user device, and
performing (240) a transaction with a mobile user device connected to the UWB network and located within a trigger area utilizing an anchor belonging to the third group of anchors.
